# EUROPÄISCHE PATENTSCHRIFT

(11) **EP 3 078 938 B1**
(45) Veröffentlichungstag und Bekanntmachung des Hinweises auf die Patenterteilung: **12.08.2020**
(21) Anmeldenummer: 16160761.9
(22) Anmeldetag: 16.03.2016
(51) Int. Cl.: G01D 5/26, G01K 7/16, G01B 21/08, G01V 9/00, G01D 5/353, H02G 1/10, G01K 11/32, H02G 9/02, G02B 6/44

(54) **VERFAHREN UND VORRICHTUNG FÜR DIE ÜBERWACHUNG EINES SEEKABELS**
METHOD AND A DEVICE FOR MONITORING AN UNDERSEA CABLE
PROCEDE ET DISPOSITIF DE SURVEILLANCE D'UN CABLE SOUS-MARIN

(30) Priorität: 07.04.2015 DE 102015105241; 15.06.2015 DE 102015109493
(43) Veröffentlichungstag der Anmeldung: 12.10.2016
(73) Patentinhaber: NKT Photonics GmbH, 51063 Köln (DE)
(72) Erfinder: Dr. Hill, Wieland, 51519 Odenthal (DE); Schäfer, Peter, 50676 Köln (DE); Dr. Olschewski, Martin, 53501 Grafschaft (DE)
(74) Vertreter: Basfeld, Rainer

(56) Entgegenhaltungen:
- EP-A2- 0 203 249
- EP-A2- 0 825 459
- WO-A1-2014/056541
- DE-A1-102009 043 547
- JP-A- 2004 264 090
- RASMUS OLSEN ET AL: "Modelling of Dynamic Transmission Cable Temperature Considering Soil-Specific Heat, Thermal Resistivity, and Precipitation", IEEE TRANSACTIONS ON POWER DELIVERY, IEEE SERVICE CENTER, NEW YORK, NY, US, vol. 28, no. 3, 1 July 2013 (2013-07-01), pages 1909-1917, XP011516048, ISSN: 0885-8977, DOI: 10.1109/TPWRD.2013.2263300

## Beschreibung

Die vorliegende Erfindung betrifft ein Verfahren für die Überwachung eines Seekabels gemäß dem Oberbegriff des Anspruchs 1 sowie eine Vorrichtung für die Überwachung eines Seekabels gemäß dem Oberbegriff des Anspruchs 8.

Definitionen: In der vorliegenden Anmeldung meint Bedeckungshöhe des Seekabels die auf dem verlegten Seekabel liegende Höhe eines Bodenmaterials, das in der Regel Sand sein wird.

Seekabel werden zunehmend eingesetzt, um große Energiemengen von Windfarmen oder zwischen verschiedenen Ländern zu transportieren. Zur Sicherung des Kabels gegen Ankerfall und ähnliche Ereignisse muss das Seekabel in der Regel durch eine Sandschicht mit einer insbesondere gesetzlich festgelegten Mindestschichtdicke von Sand, beispielsweise in der Größenordnung von 1,5m, bedeckt sein. Fehlt die Sandschicht komplett, kann das Kabel durch Meeresströmungen bewegt werden und unterliegt dadurch auch noch einem erhöhten mechanischen Verschleiß.

Für die permanente Überwachung der Schichtdicke des Sandes über dem Seekabel beziehungsweise des Freispülens von Seekabeln sind bisher keine technischen Lösungen bekannt. Deshalb müssen regelmäßige Inspektionen mit Tauchrobotern und ähnlich aufwändigem Equipment durchgeführt werden.

Ein Verfahren und eine Vorrichtung der eingangs genannten Art sind aus der WO 2014/056541 A1 bekannt. Das darin beschriebene Verfahren kann die Dicke einer Bedeckung eines stromführenden Seekabels berechnen. Dabei nutzt das Verfahren
Temperaturmessungen auf Basis eines faseroptischen Systems zur verteilten Temperaturmessung mit einer parallel zu dem Kabel verlaufenden Lichtleitfaser sowie eine vorgegebene Temperaturverteilung, die eine Beziehung zwischen der gemessenen Temperatur und der Bedeckungshöhe herstellt.

Die EP 0 825 459 A2 beschreibt ebenfalls ein Verfahren zur Bestimmung der Bedeckungshöhe eines Seekabels. Dieses Verfahren nutzt eine faseroptische Temperaturmessung zur Bestimmung der Temperatur des stromführenden Kabels. Weiterhin wird eine faseroptische Temperaturmessung durchgeführt, um die Temperatur der Umgebung des stromführenden Kabels zu bestimmen. Aus dem Vergleich dieser beiden Temperaturen wird unter Berücksichtigung des thermischen Widerstands des Bodens die Bedeckungshöhe ermittelt.

Die DE 10 2009 043 547 A1 beschreibt ein Verfahren und eine Vorrichtung zur ortsaufgelösten Temperaturmessung. Dabei wird ein faseroptisches System genutzt, bei dem sowohl der Rayleigh-Anteil als auch der Stokes- oder der anti-Stokes-Anteil des zurückgestreuten Laserlichts ausgewertet werden.

Die EP 0 203 249 A2 beschreibt ein Verfahren zur Überwachung eines Starkstromkabels. Das Verfahren nutzt ein faseroptisches System zur verteilten Temperaturmessung, bei dem eine Lichtleitfaser im Energieleiter und/oder in den Aderzwickeln und/oder im Außenbereich des Starkstromkabels vorgesehen ist.

Die JP 2004 264 090 A beschreibt ebenfalls ein Verfahren zur Überwachung eines Starkstromkabels. Dabei nutzt das Verfahren Temperaturmessungen auf Basis eines in Innern des Stromkabels angeordneten Temperatursensors. Bei der Berechnung der Temperatur des Leiters des Kabels werden Faktoren wie der Wärmewert des Leiters, der thermische Widerstand der Oberflächenverluste und Abschirmungsverluste berücksichtigt. Zusätzlicher Stand der Technik ist in RASMUS OLSEN ET AL: "Modelling of Dynamic Transmission Cable Temperature Considering Soil-Specific Heat, Thermal Resistivity, and Precipitation" zu finden.

Das der vorliegenden Erfindung zugrundeliegende Problem ist die Angabe eines Verfahrens und einer Vorrichtung der eingangs genannten Art, die eine zuverlässige und kostengünstige Überwachung des Seekabels ermöglichen.

Dies wird erfindungsgemäß durch ein Verfahren der eingangs genannten Art mit den kennzeichnenden Merkmalen des Anspruchs 1 sowie durch eine Vorrichtung der eingangs genannten Art mit den kennzeichnenden Merkmalen des Anspruchs 8 erreicht. Die Unteransprüche betreffen bevorzugte Ausgestaltungen der Erfindung. Gemäß Anspruch 1 ist vorgesehen, dass für die Auswertung der ermittelten zeitlichen Verläufe der Temperatur und des Stroms ein Algorithmus verwendet wird, der als variable Parameter den thermischen Widerstand des Bodens und die Umgebungstemperatur des Seekabels an die gemessenen zeitlichen Verläufe der Temperatur und des Stroms anpasst, wobei der zeitliche Verlauf der Temperatur und des Stroms über einen Zeitraum von mindestens einem Tag ermittelt wird.

Dabei kann der Fit dieser Umweltparameter im thermischen Modell für die kontinuierliche Bestimmung der Sandschichtdicke entlang des Seekabels eingesetzt werden. Insbesondere ist der äußere thermische Widerstand eine Funktion der Sandschichtdicke und kann daher zu deren Bestimmung eingesetzt werden.

Die Erfindung geht also den Weg über die Bestimmung des thermischen Widerstands der Umgebung des Seekabels, um von diesem auf die Höhe der Bedeckung zu schließen. Es hat sich nämlich gezeigt, dass die Stellen mit zu geringer Sandschichtdicke nicht immer einfach dort zu finden sind, wo die niedrigsten Temperaturen gemessen werden. Niedrige Temperaturen können nämlich auch durch kalte Strömungen bedingt sein und sind damit nicht unbedingt ein Zeichen für eine zu geringe Sandschichtdicke. Außerdem fehlt nach der einfachen Bestimmung der niedrigsten Temperaturen ein Maß für die Schichtdicke, welches die Auslösung von Wartungsmaßnahmen ermöglichen würde.

Auf diese Weise kann auf die aus dem Stand der Technik bekannten aufwendigen Lösungen wie die regelmäßigen Inspektionen mit Tauchrobotern verzichtet werden. Dazu kann das faseroptische System beispielsweise eine an oder in dem Seekabel angebrachte Lichtleitfaser umfassen, die sich insbesondere über die gesamte Länge des Seekabels erstreckt. Unter Zuhilfenahme der Lichtleitfaser kann das faseroptische System ortsaufgelöst die Temperatur des Seekabels ermitteln. Insbesondere durch kontinuierliche Ermittlung der Temperatur und des durch das Seekabel fließenden Stroms kann eine Änderung des thermischen Widerstands an einem bestimmten Ort des Seekabels detektiert werden, die wiederum Rückschlüsse auf eine Änderung der Bedeckung des Seekabels mit Sand an dem entsprechenden Ort erlaubt.

Es kann vorgesehen sein, dass der zeitliche Verlauf der Temperatur und/oder des Stroms über einen Zeitraum von mehreren Tagen, beispielsweise von einer Woche ermittelt wird. Insbesondere wenn sich der Strom während des Zeitraums ändert, in dem der zeitliche Verlauf der Temperatur und/oder des Stroms ermittelt wird, kann der thermische Widerstand des das Seekabel umgebenden Bodens vergleichsweise genau bestimmt werden.

Es besteht die Möglichkeit, dass der thermische Widerstand des Bodens für eine Vielzahl von Orten längs des Seekabels, insbesondere für mehr als die Hälfte der im Wasser verlegten Länge des Seekabels, vorzugsweise für die gesamte im Wasser verlegte Länge des Seekabels berechnet wird. Dabei kann der thermische Widerstand des Bodens für die Vielzahl von Orten längs des Seekabels gleichzeitig berechnet werden, wobei insbesondere der thermische Widerstand des Bodens kontinuierlich berechnet wird. Dadurch wird eine kontinuierliche und zeitnahe Bestimmung des thermischen Widerstands des das Seekabel umgebenden Bodens entlang des gesamten im Wasser verlegten Seekabels ermöglicht, so dass eine zuverlässige Überwachung der Bedeckung des Seekabels gewährleistet ist.

Es besteht die Möglichkeit, dass das faseroptische System zur verteilten Temperaturmessung auf Raman- oder Brillouin-Streuung basiert. Dabei handelt es sich um vielfältig erprobte Messmethoden, die eine hohe Genauigkeit und Zuverlässigkeit aufweisen.

Gemäß Anspruch 8 ist vorgesehen, dass die Auswertemittel für die Auswertung der ermittelten zeitlichen Verläufe der Temperatur und des Stroms einen Algorithmus verwenden können, der als variable Parameter den thermischen Widerstand des Bodens und die Umgebungstemperatur des Seekabels an die gemessenen zeitlichen Verläufe der Temperatur und des Stroms anpasst, wobei der zeitliche Verlauf der Temperatur und des Stroms über einen Zeitraum von mindestens einem Tag ermittelt wird.

Mit einer derartigen Vorrichtung kann die Bedeckung des Seekabels zuverlässig überwacht werden, wobei die Vorrichtung insbesondere geeignet ist, ein erfindungsgemäßes Verfahren auszuführen. Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: schematisch eine erfindungsgemäße Vorrichtung;
- Fig. 2: einen Querschnitt durch ein schematisch dargestelltes erstes Seekabel mit einem ersten Beispiel einer Verlegung einer Lichtleitfaser in dem Seekabel;
- Fig. 3: einen Querschnitt durch das schematisch dargestellte erste Seekabel mit einem zweiten Beispiel einer Verlegung einer Lichtleitfaser in dem Seekabel;
- Fig. 4: einen Querschnitt durch ein schematisch dargestelltes zweites Seekabel mit mehreren Beispielen einer Verlegung einer Lichtleitfaser in dem Seekabel;
- Fig. 5: einen Querschnitt durch ein schematisch dargestelltes drittes Seekabel mit mehreren Beispielen einer Verlegung einer Lichtleitfaser in dem Seekabel;
- Fig. 6: ein thermisches Ersatzschaltbild für ein verlegtes Seekabel;
- Fig. 7: ein Diagramm, in dem die Temperaturdifferenz ΔT zwischen der Lichtleitfaser und der Wassertemperatur gegen die Verlegetiefe des Seekabels aufgetragen ist;
- Fig. 8: ein Diagramm, in dem der thermische Widerstand zwischen dem Seekabel und dem umgebenden Wasser gegen die Verlegetiefe des Seekabels aufgetragen ist.

In den Figuren sind gleiche oder funktional gleiche Teile mit gleichen Bezugszeichen versehen.

Es gibt verschiedene Konstruktionsarten von Seekabeln. Bei Wechselstromübertragung werden Seekabel eingesetzt, in denen alle drei Phasen zusammen enthalten sind. Die Lichtleitfasern zur linearen Temperaturmessung entlang des Seekabels können unterschiedliche Faserpositionen besitzen. Neben der Position im Zentrum des Seekabels zwischen den einzelnen Phasen sind auch Positionen lateral versetzt, mit direktem Kontakt zu zwei der drei Phasen, als auch im Füllmaterial des Seekabels denkbar. Weiterhin kann sich die optische Lichtleitfaser auch im Drahtschirm oder im direkten Kontakt zum Außenmantel des Seekabels befinden.

Alternativ ist es auch möglich, drei einzelne Seekabel mit je einem elektrischen Leiter zu verlegen. Das wird aber praktisch nicht umgesetzt, weil der Verlegungsaufwand deutlich höher wäre. Im Falle der Gleichstromübertragung werden in der Regel zwei einphasige Seekabel eingesetzt. Hierbei befindet sich die als Temperatursensor dienende Lichtleitfaser für gewöhnlich im Drahtschirm, oder im direkten Kontakt zum Außenmantel.

Neben einer direkten Verlegung im Meeresboden, können Seekabel auch in einer zusätzlichen Verrohrung (beispielsweise aus HDPE oder Beton) verlegt sein. Diese Einfassung wird besonders im Bereich des Übergangs vom Meer zum Land und umgekehrt oder in Bereichen von niedriger Wassertiefe verbaut. In einer von dem erfindungsgemäßen Verfahren genutzten Software kann die detaillierte Beschreibung hinsichtlich Dimensionen und Materialien hinterlegt werden, wobei der Algorithmus eine Analyse der Umgebung außerhalb der Einfassung durchführen kann.

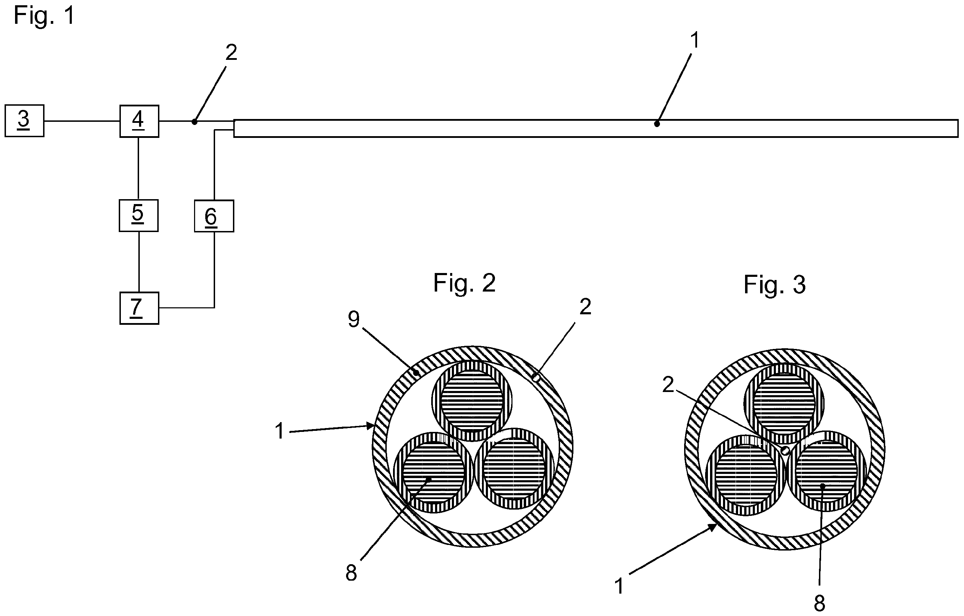

In Fig. 1 ist schematisch ein Seekabel 1 dargestellt, dass sich nach rechts in Fig. 1 über das eingezeichnete Ende hinaus erstreckt, insbesondere über mehrere Kilometer. Das Seekabel 1 soll dazu dienen, Energie zu transportieren, so dass in dem Seekabel 1 starke Ströme fließen werden. In dem Seekabel 1 ist eine Lichtleitfaser 2 angeordnet, die sich insbesondere über die gesamte unter dem Meeresspiegel verlegte Länge des Seekabels 1 erstreckt.

Fig. 2 und Fig. 3 zeigen zwei beispielhafte Anordnungen der Lichtleitfaser 2 in dem Seekabel 1. Bei dem schematisch dargestellten Seekabel 1 sind mehrere Kabel 8 dargestellt, die von einem gemeinsamen Kabelschirm 9 umgeben sind. Bei dem in Fig. 2 abgebildeten ersten Beispiel verläuft die Lichtleitfaser 2 in dem Kabelschirm 9. Bei dem in Fig. 3 abgebildeten zweiten Beispiel verläuft die Lichtleitfaser 2 in dem Zwickel der Kabel 8.

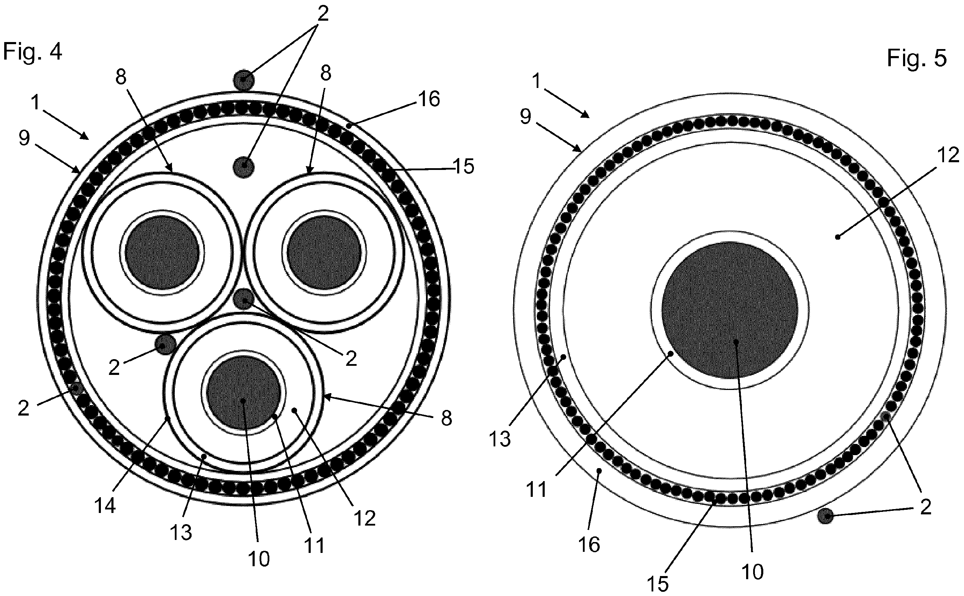

In Fig. 4 ist ein weniger schematisch dargestelltes Beispiel eines Seekabels 1 dargestellt. Dieses Seekabel 1 weist drei Phasen auf und wird für eine Wechselstromübertragung eingesetzt. In dem Seekabel 1 sind drei einzelne Kabel 8 vorgesehen, die jeweils einen mittigen Leiter 10 für eine der drei Phasen aufweist. Der mittige Leiter 10 ist von einer inneren Leitschicht 11, einer Isolierung 12, einer äußeren Leitschicht 13 und einem metallischen Schirm 14 umgeben.

Bei der Nutzung der drei Kabel 8 für die drei Phasen eines Wechselstroms brauchen die innere und die äußere Leitschicht 11, 13 nicht für die Leitung von Strom genutzt werden. Eine der Leitschichten 11, 13 kann zwar als Nullleiter dienen. Erforderlich ist dies jedoch nicht. Weiterhin kann jeweils der metallische Schirm mit dem Erdpotenzial verbunden werden.

Die drei Kabel 8 sind zusammen von einem als Armierung dienenden Drahtschirm 15 umgeben, der wiederum von einem Außenmantel 16 umgeben ist. Der als Armierung dienende Drahtschirm 15 und der Außenmantel 16 bilden zusammen den Kabelschirm 9.

Fig. 4 zeigt weiterhin verschiedene alternative Anordnungen der Lichtleitfaser 2 in dem Seekabel 1. Wie bei Fig. 3 kann die Lichtleitfaser 2 in dem Zwickel der Kabel 8 angeordnet sein. Weiterhin kann die Lichtleitfaser 2 an anderen Orten des Innenraums des Seekabels 1 angeordnet sein. Sie kann weiterhin analog zur Fig. 2 in dem Kabelschirm 9 und dabei insbesondere in dem als Armierung dienenden Drahtschirm 15 angeordnet sein. Eine weitere Möglichkeit ist die Anordnung der Lichtleitfaser 2 außerhalb und in direktem Kontakt mit dem Außenmantel 16.

In Fig. 5 ist ebenfalls ein weniger schematisch dargestelltes Beispiel eines Seekabels 1 dargestellt. Dieses Seekabel 1 weist nur eine Phase auf und wird für eine Gleichstromübertragung eingesetzt. In dem Seekabel 1 ist ein einzelnes Kabel 8 vorgesehen, das einen mittigen Leiter 10 für eine Phase aufweist. Der mittige Leiter 10 ist von einer inneren Leitschicht 11, einer Isolierung 12, einer äußeren Leitschicht 13, einem als Armierung dienenden Drahtschirm 15 und einem Außenmantel 16 umgeben. Der als Armierung dienende Drahtschirm 15 und der Außenmantel 16 bilden zusammen den Kabelschirm 9.

Auch Fig. 5 zeigt verschiedene alternative Anordnungen der Lichtleitfaser 2 in dem Seekabel 1. Wie bei Fig. 2 kann die Lichtleitfaser 2 in dem Kabelschirm 9 und dabei insbesondere in dem als Armierung dienenden Drahtschirm 15 angeordnet sein. Eine weitere Möglichkeit ist die Anordnung der Lichtleitfaser 2 außerhalb und in direktem Kontakt mit dem Außenmantel 16.

In die Lichtleitfaser 2 kann durch entsprechende Koppelmittel 4 das Licht einer Laserlichtquelle 3 eingekoppelt werden. In der Lichtleitfaser 2 können einzelne Anteile des Lichts durch temperaturabhängige Raman- oder Brillouin-Streuung zurückgestreut werden (siehe Fig. 1). Die zurückgestreuten Anteile können von den Koppelmitteln 4 Erfassungs- und Auswertemitteln 5 zugeführt werden, die das zurück gestreute Licht erfassen und aus dem erfassten zurück gestreuten Licht ortsaufgelöst die Temperatur der Lichtleitfaser 2 ermitteln. Das aus der Lichtleitfaser 2, der Laserlichtquelle 3, den Koppelmitteln 4 und den Erfassungs- und Auswertemitteln 5 gebildete faseroptische System zur verteilten Temperaturmessung ist als solches bekannt.

Dabei wird von den Erfassungs- und Auswertemitteln 5 die Temperatur der Lichtleitfaser 2 an jedem Ort der Lichtleitfaser 2 und damit an jedem Ort des Seekabels 1, insbesondere gleichzeitig und kontinuierlich, ermittelt.

In Fig. 1 sind weiterhin schematisch Erfassungsmittel 6 für in dem Seekabel 1 fließenden Strom angedeutet. Als Erfassungsmittel 6 können beliebige, insbesondere handelsübliche, Strommessvorrichtungen verwendet werden.

Die Vorrichtung umfasst weiterhin Auswertemittel 7, die mit den Erfassungsmitteln 6 und den Erfassungs- und Auswertemitteln 5 verbunden sind. Die Auswertemittel 7 können den zeitlichen Verlauf der ortsaufgelöst ermittelten Temperatur und den zeitlichen Verlauf des erfassten Stroms speichern.

Weiterhin können die Auswertemittel 7 aus den zeitlichen Verläufen der Temperatur und des Stroms den thermischen Widerstand des das Seekabel umgebenden Bodens ortsaufgelöst berechnen. Um dies zu erreichen, werden mit einem geeigneten Algorithmus der thermische Widerstand und die Umgebungstemperatur des Seekabels 1 als variable Parameter bei der Anpassung eines geeigneten thermischen Modells an die zeitlichen Verläufe von Temperatur und Strom bestimmt. Die dabei verwendeten zeitlichen Verläufe können beispielsweise einen Zeitraum von einer Woche berücksichtigen.

Wesentlich bei einer derartigen Methode ist, dass sich der Strom während des berücksichtigten Zeitraums ändert. Gegebenenfalls kann eine zeitliche Änderung des Stroms vorgegeben werden, um die Ermittlung des thermischen Widerstands verlässlich zu gestalten.

Der verwendete Algorithmus berücksichtigt, dass äußere Parameter wie insbesondere der thermische Widerstand der Bodens und die Umgebungstemperatur jahreszeitlichen Schwankungen unterliegen.

Das erfindungsgemäße Verfahren erlaubt dabei durch die Verwendung des faseroptischen Systems zur verteilten Temperaturmessung und die geschilderten Berechnungsmaßnahmen die Ermittlung des thermischen Widerstandes kontinuierlich und gleichzeitig an jedem Ort des Seekabels.

Aus dem ortsaufgelöst ermittelten thermischen Widerstand des Bodens können die Auswertemittel 7 auf die Bedeckungshöhe an jedem einzelnen Ort des Seekabels 1 schließen. Dazu sind beispielsweise in den Auswertemitteln 7 oder in mit den Auswertemitteln 7 verbundenen Speichermitteln Daten hinterlegt, die die Abhängigkeit des thermischen Widerstands der Umgebung eines Seekabels 1 von der Schichtdicke einer Bedeckung auf dem Seekabel 1 wiederspiegeln.

Die Auswertemittel 7 können dabei insbesondere kontinuierlich und gleichzeitig die Schichtdicke der Bedeckung eines jeden Ortes des Seekabels 1 ermitteln.

Wenn die Auswertemittel 7 feststellen, dass ein Teil des Seekabels 1 nicht mehr ausreichend mit Sand bedeckt ist, können sie dies dem Benutzer anzeigen und/oder entsprechende Wartungsmaßnahmen auslösen.

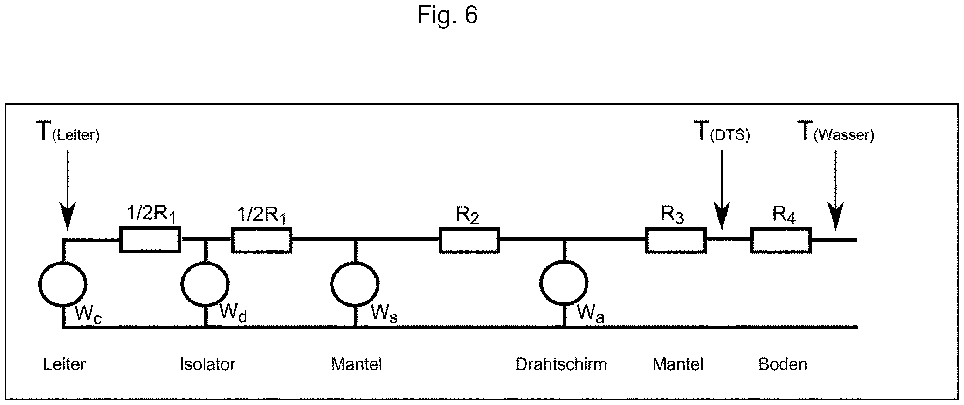

Die Temperaturverteilung und zeitliche Entwicklung bei zyklischem Lastverhalten im Seekabel 1 kann über das in Fig. 6 abgebildete Ersatzschaltbild berechnet werden. Hier werden Wärmequellen als Stromquellen Wᵢ, thermische Widerstände als elektrische Widerstände Rᵢ und Wärmekapazitäten als Kapazitäten (hier vernachlässigt) betrachtet. In einem Energiekabel werden verschiedene thermische Verluste wirksam, je nachdem ob diese mit Gleichstrom oder Wechselstrom betrieben werden. Dielektrische Verluste entstehen im Isolator und Wirbelströme im metallischen Drahtschirm. Je nach Lastzustand und Betrieb des Kabels tragen diese Verluste unterschiedlich stark zur Erwärmung des Energiekabels bei.

Die Temperaturverteilung vom elektrischen Leiter (heiß) zur Umgebung (kalt) wird demnach wie das Absinken einer Spannung über einen Widerstand betrachtet und ergibt somit die Temperatur in der entsprechenden Kabelschicht. Das Schaltbild wurde in einer von dem erfindungsgemäßen Verfahren genutzten Software für die Umgebung, die mit Boden beziehungsweise R₄ bezeichnet ist, erweitert. Mit T_{(DTS)} wird dabei die Temperatur der Lichtleitfaser 2 bezeichnet.

Ob und mit wieviel Schutzmaterial das Seekabel noch bedeckt ist, wird durch einen Algorithmus anhand von T_{(DTS)} bei entsprechendem

Lastverhalten des Stroms bestimmt. Als Ergebnis werden die Umgebungstemperatur T_{(Wasser)} und der thermische Widerstand des Meeresbodens R₄ erhalten.

Mit zunehmender Verlegetiefe steigt die Temperaturdifferenz im Gleichgewichtszustand ("Steady State") zwischen gemessener Temperatur des DTS-Systems (Distributed Feed Back) beziehungsweise der von der Lichtleitfaser 2 gemessenen Temperatur, beispielsweise zwischen der Lichtleitfaser 2 an der Außenhülle des Kabels und der Wassertemperatur, aufgrund des thermischen Widerstandes des Bodens an.

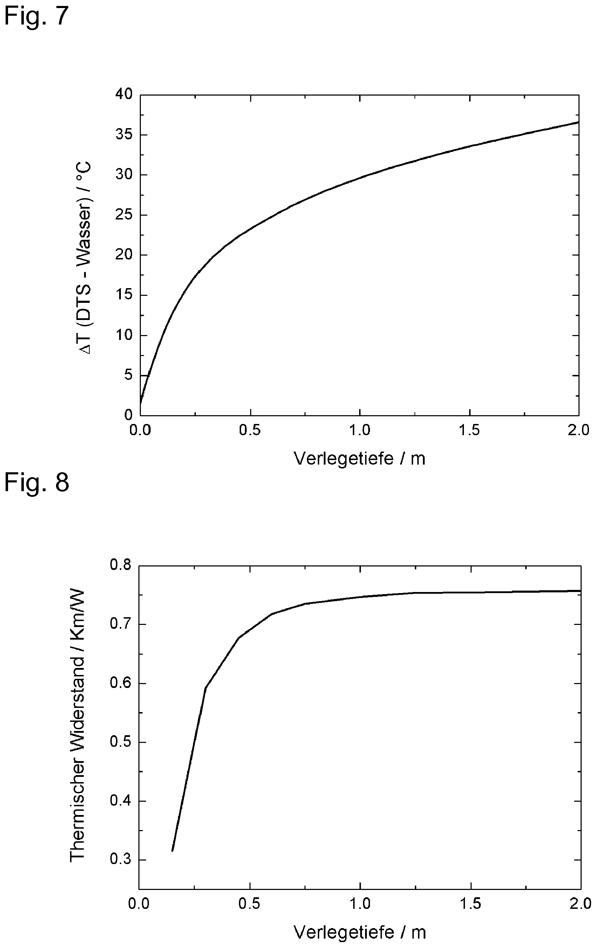

Fig. 7 zeigt eine beispielhafte Abhängigkeit der Temperaturdifferenz zwischen der Temperatur an der Lichtleitfaser 2 einerseits und dem Wasser andererseits von der Verlegetiefe des Seekabels 1 beziehungsweise von der Schichtdicke der Bedeckung des Seekabels 1. Beträgt die Temperatur des Außenmantels, an dem beispielsweise die Lichtleitfaser 2 angeordnet ist, im Gleichgewichtszustand annähernd Wassertemperatur, liegt dieser bei einer Verlegetiefe von 2m bereits deutlich über Umgebungstemperatur.

Der verwendete Algorithmus löst das in Fig. 6 skizzierte volle Ersatzschaltbild anhand einer bis zu siebentägigen Historie für die Umgebungsparameter Umgebungstemperatur T_{(Wasser)} und thermischer Widerstand des Meeresbodens R₄ über einen Fit, der beide Parameter anhand von quadratischer Abweichung optimiert. Startwerte für den Fit werden wahlweise auch aus zusätzlicher Sensorik erhalten. In der Software ist die vorgesehene Verlegetiefe des Energiekabels im Meeresboden hinterlegt. Wird das Seekabel 1 zunehmend, beispielsweise durch Meeresströmung, freigelegt, ändert sich durch die andere Umgebung des Seekabels 1 auch das transiente Temperaturverhalten. Der Algorithmus bewertet dies mit einem zunehmend niedrigeren thermischen Widerstand des Bodens. Aus Fig. 8 geht hervor, dass dieser Effekt besonders stark ausgeprägt ist, bevor das Seekabel 1 im Meer freigelegt würde. Es lässt sich somit auch eine stetige Abnahme der Verlegetiefe beobachten.

Es besteht die Möglichkeit, diese Analyse in regelmäßigen zeitlichen und räumlichen Abständen durchzuführen und so eine Analyse der Verlegetiefe des gesamten Seekabels 1 durchzuführen.

Meeresböden können aus verschiedenen Materialien bestehen und dadurch unterschiedliche thermische Eigenschaften besitzen. Tabelle 1 listet verschiedene Typen auf und beschreibt die mögliche Bandbreite von thermischer Wärmeleitfähigkeit beziehungsweise spezifischem Wärmewiderstand. Die Tabelle ist der Veröffentlichung "Kabelverbindungen innerhalb der Offshore-Windfarm Arcadis Ost 1. Thermische und magnetische Emissionen" von Heinrich Brakelmann, Rheinberg, 2010 entnommen.

Da typische Streckenlängen von Seekabeln um 50km und mehr betragen, kann das Seekabel von Meeresböden verschiedener Sorten umgeben sein. Prinzipiell kann der verwendete Algorithmus die Verlegetiefe für verschiedene Typen von Meeresböden bestimmen. Zusätzliche Informationen (geologisches Gutachten, Ergebnis von Sandproben und dergleichen) sowie eine genaue Zuordnung dieser unterschiedlichen Meeresböden entlang des Kabels ermöglichen es, eine maximale Genauigkeit zu erzielen.

**Tabelle 1: Thermische Eigenschaften wassergesättigter Böden.**

| Thermische Eigenschaften wassergesättigter Böden | Wärmeleitfähigkeit minimal | Wärmeleitfähigkeit maximal | Spezifischer Wärmewiderstand maximal | Spezifischer Wärmewiderstand minimal |
|---|---|---|---|---|
| | W/(K m) | W/(K m) | Km/W | Km/W |
| Kies / gravel | 2,00 | 3,30 | 0,50 | 0,30 |
| Sand (feuchteabhängig) | 1,50 | 2,50 | 0,67 | 0,40 |
| Ton / clay | 0,90 | 1,80 | 1,11 | 0,56 |
| Geschiebemergel / glacial drift | 2,60 | 3,10 | 0,38 | 0,32 |
| Schluff/Schlick / silt | 1,40 | 2,00 | 0,71 | 0,50 |

## Patentansprüche

1. Verfahren für die Überwachung eines Seekabels (1), das insbesondere dazu dient, Energie zu transportieren, umfassend folgende Verfahrensschritte:
- Der zeitliche Verlauf der Temperatur des Seekabels (1) wird durch ein faseroptisches System zur verteilten Temperaturmessung ortsaufgelöst ermittelt,
- der zeitliche Verlauf eines durch das Seekabel (1) hindurchfließenden Stroms wird ermittelt,
- aus den ermittelten zeitlichen Verläufen der Temperatur und des Stroms wird der thermische Widerstand des das Seekabel (1) umgebenden Bodens ortsaufgelöst berechnet,
- aus dem ortsaufgelöst berechneten thermischen Widerstand des Bodens wird auf die Bedeckungshöhe des Seekabels (1) geschlossen,
**dadurch gekennzeichnet, dass** für die Auswertung der ermittelten zeitlichen Verläufe der Temperatur und des Stroms ein Algorithmus verwendet wird, der als variable Parameter den thermischen Widerstand (R₄) des Bodens und die Umgebungstemperatur (T_{(wasser)}) des Seekabels (1) an die gemessenen zeitlichen Verläufe der Temperatur und des Stroms anpasst, wobei der zeitliche Verlauf der Temperatur und des Stroms über einen Zeitraum von mindestens einem Tag ermittelt wird.

2. Verfahren nach Anspruch 1, **dadurch gekennzeichnet, dass** der zeitliche Verlauf der Temperatur und/oder des Stroms über einen Zeitraum von mehreren Tagen, beispielsweise von einer Woche ermittelt wird.

3. Verfahren nach einem der Ansprüche 1 oder 2, **dadurch gekennzeichnet, dass** der Strom sich während des Zeitraums ändert, in dem der zeitliche Verlauf der Temperatur und/oder des Stroms ermittelt wird.

4. Verfahren nach einem der Ansprüche 1 bis 3, **dadurch gekennzeichnet, dass** der thermische Widerstand des Bodens für eine Vielzahl von Orten längs des Seekabels (1), insbesondere für mehr als die Hälfte der im Wasser verlegten Länge des Seekabels (1), vorzugsweise für die gesamte im Wasser verlegte Länge des Seekabels (1) berechnet wird.

5. Verfahren nach Anspruch 4, **dadurch gekennzeichnet, dass** der thermische Widerstand des Bodens für die Vielzahl von Orten längs des Seekabels (1) gleichzeitig berechnet wird.

6. Verfahren nach einem der Ansprüche 1 bis 5, **dadurch gekennzeichnet, dass** der thermische Widerstand des Bodens kontinuierlich berechnet wird.

7. Verfahren nach einem der Ansprüche 1 bis 6, **dadurch gekennzeichnet, dass** das faseroptische System zur verteilten Temperaturmessung auf Raman- oder Brillouin-Streuung basiert.

8. Vorrichtung für die Überwachung eines Seekabels (1), das insbesondere dazu dient, Energie zu transportieren, umfassend
- mindestens eine Lichtleitfaser (2) für eine ortsaufgelöste Temperaturmessung, wobei die Lichtleitfaser in oder an dem Seekabel (1) angeordnet ist oder angeordnet werden kann,
- mindestens eine Laserlichtquelle (3), deren Licht in die Lichtleitfaser (2) eingekoppelt werden kann, wobei in der Lichtleitfaser (2) zurück gestreute Anteile des von der Laserlichtquelle (3) erzeugten Lichts aus der Lichtleitfaser (2) ausgekoppelt werden können,
- Erfassungs- und Auswertemittel (5), die das zurück gestreute Licht erfassen und aus dem erfassten zurück gestreuten Licht ortsaufgelöst die Temperatur der Lichtleitfaser (2) ermitteln können,
- Erfassungsmittel (6) für in dem Seekabel (1) fließenden Strom,
- Auswertemittel (7), die den zeitlichen Verlauf der ortsaufgelöst ermittelten Temperatur und den zeitlichen Verlauf des erfassten Stroms speichern können, wobei die Auswertemittel (7) aus den zeitlichen Verläufen der Temperatur und des Stroms den thermischen Widerstand des das Seekabel (1) umgebenden Bodens ortsaufgelöst berechnen können sowie aus dem ortsaufgelöst ermittelten thermischen Widerstand des Bodens auf die Bedeckungshöhe des Seekabels (1) schließen können,
**dadurch gekennzeichnet, dass** die Auswertemittel (7) für die Auswertung der ermittelten zeitlichen Verläufe der Temperatur und des Stroms einen Algorithmus verwenden können, der als variable Parameter den thermischen Widerstand (R₄) des Bodens und die Umgebungstemperatur (T_{(wasser)}) des Seekabels (1) an die gemessenen zeitlichen Verläufe der Temperatur und des Stroms anpasst, wobei der zeitliche Verlauf der Temperatur und des Stroms über einen Zeitraum von mindestens einem Tag ermittelt wird.

9. Vorrichtung nach Anspruch 8, **dadurch gekennzeichnet, dass** die Vorrichtung geeignet ist, ein Verfahren nach einem oder mehreren der Ansprüche 1 bis 7 auszuführen.

## Claims

1. Method for monitoring a submarine cable (1), which is used in particular to transport energy, comprising the following method steps:
- the temporal course of the temperature of the submarine cable (1) is determined in a spatially resolved manner by a fibre-optic system for distributed temperature measurement,
- the temporal course of a current flowing through the submarine cable (1) is determined,
- the thermal resistance of the ground surrounding the submarine cable (1) is calculated in a spatially resolved manner from the determined temporal courses of the temperature and the current,
- the covering height of the submarine cable (1) is deduced from the spatially resolved calculated thermal resistance of the ground,
**characterised in that** an algorithm is used for the evaluation of the determined temporal courses of the temperature and the current which adapts the thermal resistance (R₄) of the ground and the ambient temperature (T_{(water)}) of the submarine cable (1), as variable parameters, to the measured temporal courses of the temperature and the current, wherein the temporal course of the temperature and the current is determined over a period of at least one day.

2. Method according to claim 1, **characterised in that** the temporal course of the temperature and/or the current is determined over a period of several days, for example a week.

3. Method according to any one of claims 1 or 2, **characterised in that** the current changes during the period in which the temporal course of the temperature and/or the current is determined.

4. Method according to any one of claims 1 to 3, **characterised in that** the thermal resistance of the ground is calculated for a plurality of locations along the submarine cable (1), in particular for more than half the length of the submarine cable (1) laid in the water, preferably for the total length of the submarine cable (1) laid in the water.

5. Method according to claim 4, **characterised in that** the thermal resistance of the ground for the plurality of locations along the submarine cable (1) is calculated simultaneously.

6. Method according to any one of claims 1 to 5, **characterised in that** the thermal resistance of the ground is calculated continuously.

7. Method according to any one of claims 1 to 6, **characterised in that** the fibre optic system for distributed temperature measurement is based on Raman or Brillouin scattering.

8. Device for monitoring a submarine cable (1), which is used in particular to transport energy, comprising
- at least one optical fibre (2) for a spatially resolved temperature measurement, wherein the optical fibre is arranged or is able to be arranged in or on the submarine cable (1),
- at least one laser light source (3), the light of which can be coupled into the optical fibre (2), wherein parts of the light generated by the laser light source (3) scattered back in the optical fibre (2) are able to be coupled out of the optical fibre (2),
- detection and evaluation means (5) which detect the light scattered back and can determine the temperature of the optical fibre (2) from the detected backscattered light in a spatially resolved manner,
- detection means (6) for current flowing in the submarine cable (1),
- evaluation means (7) which can store the temporal course of the temperature determined in a spatially resolved manner and the temporal course of the detected current, wherein the evaluation means (7) are able to calculate the thermal resistance of the ground surrounding the submarine cable (1) from the temporal courses of the temperature and the current in a spatially resolved manner, and are able to deduce the covering height of the submarine cable (1) from the thermal resistance of the ground determined in a spatially resolved manner,
**characterised in that** the evaluation means (7) can use an algorithm for the evaluation of the determined temporal courses of the temperature and the current, which adapts the thermal resistance (R₄) of the ground and the ambient temperature (T_{(water)}) of the submarine cable (1), as variable parameters, to the measured temporal courses of the temperature and the current, wherein the temporal course of the temperature and the current is determined over a period of at least one day.

9. Device according to claim 8, **characterised in that** the device is suitable for carrying out a method according to one or more of claims 1 to 7.

## Revendications

1. Procédé de surveillance d'un câble sous-marin (1) qui sert en particulier à transporter l'énergie, comprenant les étapes de procédé suivantes :
- la variation temporelle de la température du câble sous-marin (1) est déterminée par un système à fibres optiques de mesure de température distribuée,
- la variation temporelle d'un courant parcourant le câble sous-marin (1) est déterminée,
- la résistance thermique du sol entourant le câble sous-marin (1) est calculée par résolution spatiale à partir des variations temporelles déterminées de la température et du courant,
- la résistance thermique du sol calculée par résolution spatiale permet de déduire la hauteur de recouvrement du câble sous-marin (1),
**caractérisé en ce que**, pour l'évaluation des variations temporelles déterminées de la température et du courant, est utilisé un algorithme qui adapte, en tant que paramètre variable, la résistance thermique (R₄) du sol et la température ambiante (T_{(Eau)}) du câble sous-marin (1) aux variations temporelles mesurées de la température et du courant, la variation temporelle de la température et du courant étant déterminée sur une période d'au moins un jour.

2. Procédé selon la revendication 1, **caractérisé en ce que** la variation temporelle de la température et/ou du courant est déterminée sur une période de plusieurs jours, par exemple une semaine.

3. Procédé selon l'une des revendications 1 ou 2, **caractérisé en ce que** le courant se modifie pendant la période au cours de laquelle est déterminée la variation temporelle de la température et/ou du courant.

4. Procédé selon l'une des revendications 1 à 3, **caractérisé en ce que** la résistance thermique du sol est calculée pour une pluralité de lieux le long du câble sous-marin (1), en particulier pour plus de la moitié de la longueur immergée dans l'eau du câble sous-marin (1), de préférence pour la totalité de la longueur immergée dans l'eau du câble sous-marin (1).

5. Procédé selon la revendication 4, **caractérisé en ce que** la résistance thermique du sol est calculée simultanément pour la pluralité de lieux le long du câble sous-marin (1).

6. Procédé selon l'une des revendications 1 à 5, **caractérisé en ce que** la résistance thermique du sol est calculée en continu.

7. Procédé selon l'une des revendications 1 à 6, **caractérisé en ce que** le système à fibres optiques de mesure de température distribuée repose sur la diffusion Raman ou Brillouin.

8. Dispositif de surveillance d'un câble sous-marin (1) qui sert en particulier à transporter l'énergie, comprenant
- au moins une fibre optique (2) pour une mesure de température par résolution spatiale, la fibre optique étant disposée ou pouvant être disposée dans ou contre le câble sous-marin (1),
- au moins une source de lumière laser (3) dont la lumière peut être couplée dans la fibre optique (2), moyennant quoi des proportions rétrodiffusées dans la fibre optique (2) de la lumière produite par la source de lumière laser (3) peuvent être découplées de la fibre optique (2),
- des moyens de détection et d'évaluation (5) qui détectent la lumière rétrodiffusée et peuvent déterminer, à partir de la lumière rétrodiffusée détectée, par résolution spatiale la température de la fibre optique (2),
- des moyens de détection (6) pour le courant circulant dans le câble sous-marin (1),
- des moyens d'évaluation (7) qui peuvent enregistrer la variation temporelle de la température déterminée par résolution spatiale et la variation temporelle du courant détecté, sachant que les moyens d'évaluation (7) peuvent calculer par résolution spatiale la résistance thermique du sol entourant le câble sous-marin (1) à partir des variations temporelles de la température et du courant, de même que la résistance thermique du sol déterminée par résolution spatiale permet de déduire la hauteur de recouvrement du câble sous-marin (1),
**caractérisé en ce que** les moyens d'évaluation (7) pour l'évaluation des variations temporelles déterminées de la température et du courant peuvent utiliser un algorithme qui adapte, en tant que paramètre variable, la résistance thermique (R₄) du sol et la température ambiante (T_{(Eau)}) du câble sous-marin (1) aux variations temporelles mesurées de la température et du courant, la variation temporelle de la température et du courant étant déterminée sur une période d'au moins un jour.

9. Dispositif selon la revendication 8, **caractérisé en ce que** le dispositif est adapté pour exécuter un procédé selon une ou plusieurs des revendications 1 à 7.
